# EUROPEAN PATENT APPLICATION

(11) **EP 2 071 107 A2**
(43) Date of publication of application: **17.06.2009**
(21) Application number: 08253981.8
(22) Date of filing: 11.12.2008
(51) Int. Cl.: E05B 73/00, G11B 33/04

(54) **Lockable container with reinforced cover**

(30) Priority: 12.12.2007 US 955261
(71) Applicant: VIVA ONETIME LIMITED, Nassau, New Providence (BS)
(72) Inventor: Choi, King Yeung, Hong Kong (CN); Kwong, Kwok Koung, Hong Kong (CN)
(74) Representative: Jackson, Richard Eric

(57) **Abstract**

A lockable container (10) includes a first cover (12), a second opposing cover (14), a connecting portion (18) connecting the first cover and the second cover to be movable relatively between an open position and a closed position, and a reinforcing structure (30a-f) mounted on an inner surface of at least one of the first cover and the second cover, wherein the reinforcing member is structured and positioned to limit deformation of the other of the first cover and the second cover when pressure is applied thereto. The reinforcing structure may be an upstanding wall or a set of ribs, as examples.

## Description

### BACKGROUND OF THE INVENTION

The present application relates to a lockable container for securing assets and, more particularly, to a lockable container for securing assets. The container includes a reinforcing member that provides additional support for at least one cover of the container.

Currently, there are many containers that can be used to secure storage media such as, for example, digital versatile discs ("DVDs"), compact discs ("CDs"), and video games. A typical storage container includes a cover portion and a base portion that is hingedly coupled to the cover portion. An asset to be secured is placed in the container, and the cover portion is mated with and closed over the base portion to secure the asset within the container. These storage containers may, for example, be displayed in a live retail or rental environment, where potential customers can handle and examine the storage container to determine, for example, whether to buy or rent the asset stored therein. Thus, since many potential customers may handle these storage containers, it is necessary to provide a locking means for the storage container to deter handling, damaging and potential theft of the asset stored therein.

Various locking systems exist for use in both the live retail and rental environments. One system for locking a storage container involves placing an active electronic security tag (e.g., electronic article surveillance ("EAS") tag or radio frequency identification ("RFID") tag within the container. The container is then sealed using edge labels. The edge labels prevent the container from being easily opened, and prevent the asset and security tag from being removed from the container. Such a container can also be used with an external security apparatus that wraps around the container to provide additional security to the asset within the container.

These systems, however, have some limitations. For example, for added security in a live retail or rental environment, the containers are sometimes locked behind the counter, thereby denying a consumer the benefit of a "live sale." Furthermore, consumers often find the edge labels difficult to remove when the container is to be opened. If an additional external security apparatus is used, the apparatus must either be cut off by the retailer at the point of purchase or by the consumer at home. This external apparatus is then discarded, which may not be environmentally friendly.

Another system for locking a storage container involves securing the container with a separate locking device. Examples of such locking devices are described, for example, in Burdett et al. U.S. Pat. No. 5,944,185 and Burdett et al. U.S. Pat. No. 6,135,280. Such locking devices are inserted into or attached to a container to lock the container, and are later removed from communication with the container to unlock the container.

Because a locking device is separate from its container, complications may arise. For example, in order to lock the container in a live retail or rental environment, a retailer must first insert the lock into or attach the lock to the container, prior to locking the container with a locking apparatus. When the container is unlocked by a retailer, the lock is either reused, stocked, restocked, or discarded. This can, for example, lead to increased costs, administrative complications, and environmental problems. In addition, such a locking device that is both separate from and external to a container is accessible to a consumer, which enable tampering.

One solution to this problem is disclosed in Assignee's co-pending United States Patent Application Serial No. 10/723,911 entitled LOCKABLE CONTAINER HAVING AN INTEGRAL AND INTERNAL LOCKING MECHANISM AND METHODS OF USE filed November 24, 2003, the entire contents of which are hereby incorporated by reference herein. In this application, the locking member is integral with the container and remains so even when the contain is unlocked. As a result, the locking member cannot be misplaced, and the increased cost and administrative time that may result from using other locks described above can be avoided. In addition, when the locking member is integral with the container, there is a reduced chance of tampering with the lock as well.

While such an integral locking member reduces the chance that the lock will be tampered with, the container itself can be tampered with and the locking member may be defeated by brute force, for example. Since there is a void, or space in the container in which the asset is positioned, the covers of the container are particularly susceptible to deformation when force is applied inwardly. It is noted that the covers are commonly made of a plastic material that is somewhat flexible. Thus, when force is applied to the cover of such a container, for example, the front cover is likely to deform. As a result, a gap may be created around the edge of the front cover as it deforms. This gap allows a potential thief an opening to pry the front cover away from the back cover even if the container is locked. In addition, it is noted that containers with separate locks such as those described above are also vulnerable to tampering in this manner.

Accordingly, it would be desirable to provide a lockable container for securing assets that avoids these problems.

### SUMMARY OF THE INVENTION

It is an object of the present invention to provide a locking container for securing an asset with at least one reinforcing member provided on at least one cover of the container to prevent deformation of the at least one of the first and second covers of the lockable container.

A lockable container in accordance with an embodiment hereof includes a first cover, a second cover positioned opposed to the first cover and operable to carry an asset, a connecting portion connecting the first cover and the second cover such that the first cover is movable relative to the second cover between an open position and a closed position and a reinforcing member mounted on an inner surface of at least one of the first cover and the second cover, wherein the reinforcing member is structured and positioned to also limit deformation of the other of the first cover and the second cover when force is applied thereto.

Other features and advantages of the present invention will become apparent from the following description of the invention which refers to the accompanying drawings.

### BRIEF DESCRIPTION OF THE DRAWINGS

Fig. 1 is a top plan view of a lockable container in an open position in accordance with an embodiment of the present invention.

Fig. 2 is a cross-sectional view of the lockable container of Figure 1 at the line A-A.

Fig. 3A is a to plan view of the lockable container of Figure 1 in a closed position.

Fig. 3B is a cross section of the lockable container at the line B-B in Figure 3A.

FIG. 4 is an illustration of the lockable container of Figures 1-3 with a portion thereof highlighted.

Fig. 5 is a more detailed view of the highlighted portion of Figure 4.

Fig. 6 is a top plan view of a lockable container in an open position in accordance with another embodiment of the present invention.

Fig. 7 is a cross-sectional view of the lockable container of Figure 6 at the line A-A.

Fig. 8A is a to plan view of the lockable container of Figure 6 in a closed position.

Fig. 8B is a cross section of the lockable container at the line B-B in Figure 8A.

FIG. 9 is an illustration of the lockable container of Figures 6-8 with a portion thereof highlighted.

FIG. 10 is 5 is a more detailed view of the highlighted portion of Figure 9.

### DETAILED DESCRIPTION OF EMBODIMENTS OF THE INVENTION

In accordance with the present invention, a lockable container for securing assets includes at least one reinforcement member that is structured and positioned to provide additional support for at least one of the covers of the container.

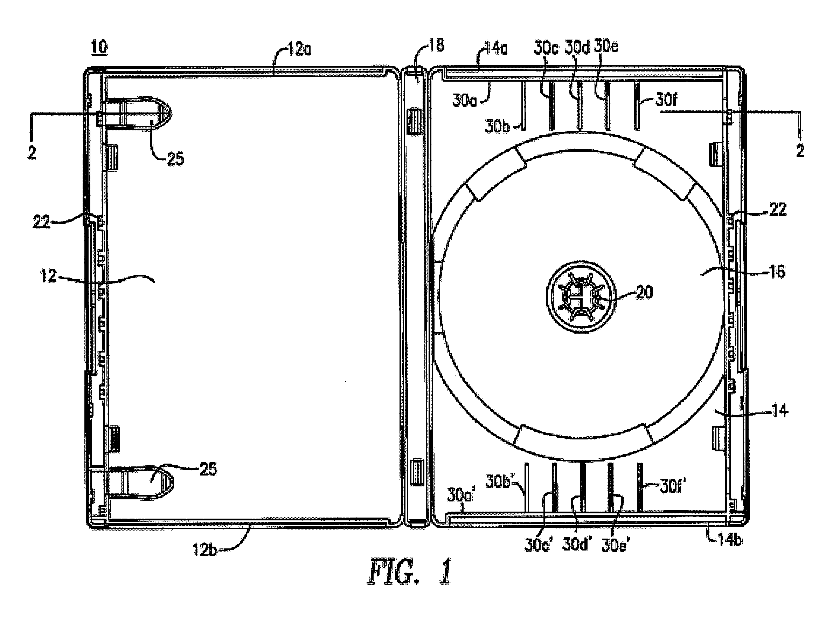

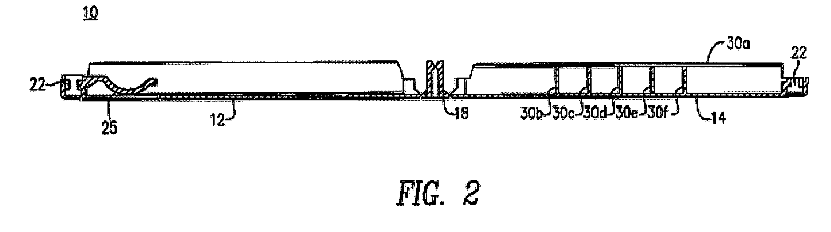

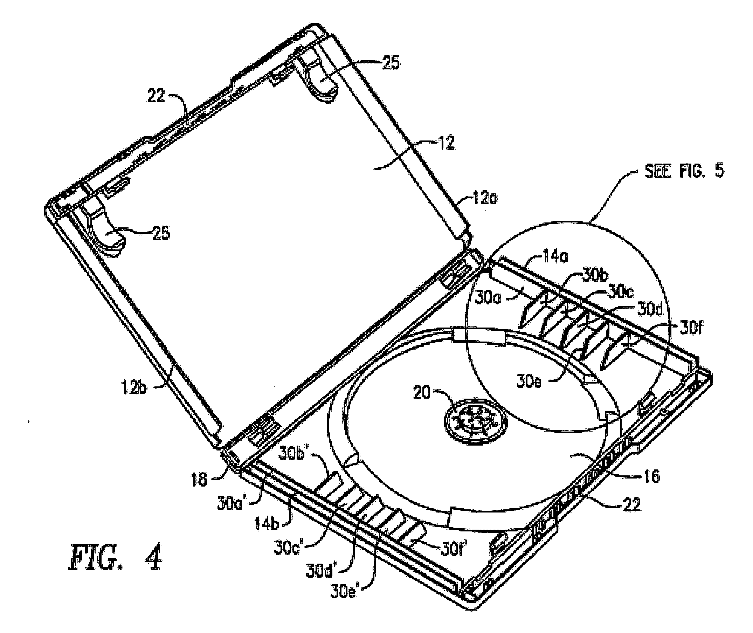

A lockable container **10** in accordance with a first embodiment of the present application is described with reference to Figs. 1-5. As can be seen in Fig. 1, for example, the lockable container **10** preferably includes a first cover **12** (also referred to as a front cover) and a second cover **14** (also referred to as a base of the container) that is pivotally coupled, or "hinged," to the first cover for securing at least one asset **16** within the container **10.** As shown in Fig. 1, asset **16** preferably resides within the second cover **14.** However, this is merely illustrative, and one or both of first cover **12** and second cover **14** may be capable of receiving asset **16.** The second cover **14** may also be referred to as the base of the container since the asset **16** is preferably positioned therein. A connecting portion or spine **18** provides pivot or hinged connections between the spine and separately each of the first and second covers **12, 14.**

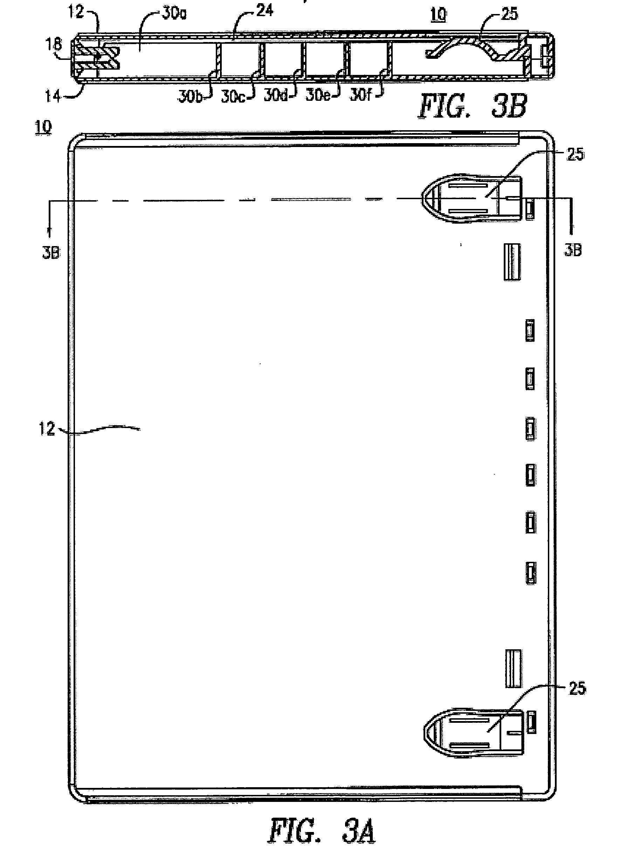

The container **10** may be locked to secure asset **16** within the container. In particular, the container **10** is preferably structured to accommodate an optical disc **16** as illustrated in Fig. 1, for example, and includes a hub structure **20** for holding the disc. A known locking member (not shown) may be provided to engage the locking structures **22** of the first and second covers **12, 14,** respectively, to lock the container in its closed position. Figs 3A and 3B illustrates the container **10** with the covers **12, 14** in the closed position. In a preferred embodiment, the locking member is similar to that described in Assignee's co-pending United States Patent Application No. 10/723,911 mentioned above. In that, the container **10** preferably includes an internal locking member (not shown) that interacts with the locking structures **22** to lock the covers **12, 14** together in the closed position. While the container **10** is described with reference to a locking member similar to that described in Assignee's co-pending Application Serial No. 10/723,911, it is noted that any suitable lock may be used.

The first and second covers **12, 14** preferably include opposite top or first end region sidewalls **12a, 14a** and opposite bottom or second end region sidewalls **12b, 14b,** respectively, that extend upward from an inner surface of the covers, at the top and bottom end regions of the container. The sidewalls **12a-12b, 14a-14b** prevent access between the top and bottom of the container **10** when the first and second covers **12, 14** are in the closed position. In a preferred embodiment, the sidewalls **12a-12b, 14a-14b** overlap to provide further protection to the asset inside the container **10.** In particular, the top sidewall **12a** of the first cover **12** is preferably positioned slightly inward along the inner surface from the top sidewall **14a** of the base **14** such that the sidewall **14a** forms a top outer surface of the container **10** when the covers **12, 14** are in the closed position. Similarly, the bottom sidewall **12b** of the first cover is positioned inward along the inner surface from with respect to the bottom sidewall **14b.**

In addition, in accordance with an embodiment of the present application, at least one of the first and second covers **12, 14** of the container **10** includes a reinforcing structure, in this embodiment comprised of at least one reinforcing member **30a-30f,** which provides additional structural support to the at least one of the covers **12, 14** on which that reinforcing structure is disposed, and thus limits or prevents deformation of that cover. The shape of that structure also prevents deformation of the other opposing cover, as described below.

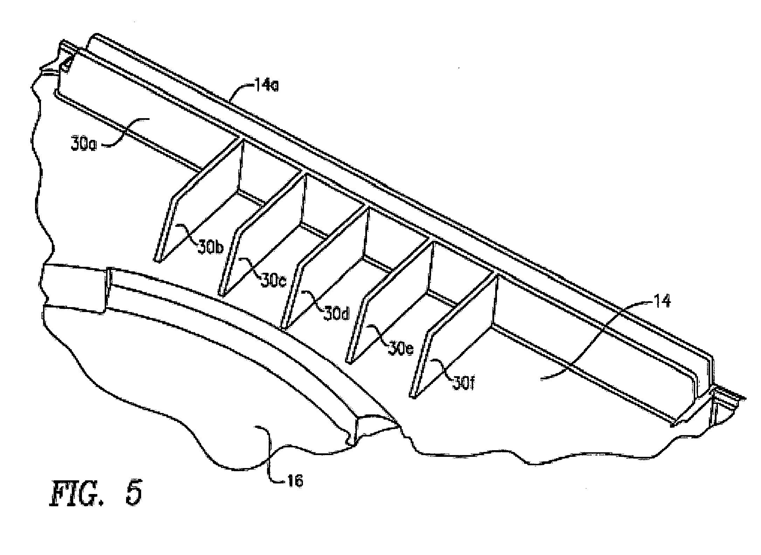

In Fig. 1, an inner wall **30a** extends upward from the inner surface toward the top end region of the base **14** and is spaced inward from the top sidewall **14a.** A corresponding inner wall **30a¹** is positioned toward the bottom end region of the second cover or base **14.** In addition, a plurality of ribs **30b-30f** extend upward from the top end region of the inner surface of the base **14** and extend perpendicularly from the inner wall **30a** toward the middle of the base **14.** Similarly, ribs **30b¹-30f¹** extend perpendicularly inward from the bottom inner wall **30a¹.** As is best illustrated in Fig. 5, the inner wall **30a** is preferably spaced inward from the top sidewall **14a** such that the top sidewall **12a** of the front cover **12** is accommodated between the top sidewall **14a** of second cover **14** and the inner wall **30a.** In a similar manner, inner wall **30a¹** is preferably spaced inward from the bottom sidewall **14b** such that the bottom sidewall **12b** of the front cover **12** is accommodated between the bottom sidewall **14b** of second cover **14** and the inner wall **30a¹.** As illustrated, the ribs **30b-30f** and **30b¹-30f¹** extend toward the center of the cover **14,** but do not interfere with placement of the asset **16.**

The height of the reinforcing members **30a-30f, 30a¹-30¹** is preferably substantially the same as that of the sidewalls **14a, 14b.** However, as can best be seen in Fig. 3A, the height of the reinforcing members **30a-30f** is preferably set at slightly less than that of the sidewalls to allow printed material to be carried inside the container **10** by the clips **25** which are preferably provided on the inner surface of the first cover **12.** It is common to include lyrics for songs recorded on the optical disc **16,** for example, on printed material secured in place by the clips **25.** Thus, a small gap **24** is preferably present between the tallest point of the reinforcing members **30a-30f and 30a¹-30f¹** and the cover **12** when the covers **12, 14** are in the closed position. Thus, the container **10** can still be closed properly even if literature or other material is present in the clips **25.** Alternatively, the reinforcing members might be of a height to contact the other cover. The reinforcing members will support their own cover and be abutted at their free or upper edges by the other cover, if the latter is deformed beyond a selected extent.

In operation, when the container **10** is in the closed position, the reinforcing members **30a-30f** and **30a¹-30f¹** prevent the front cover **12** from deforming beyond a certain point. That is, when pressure is applied to the cover **12,** and the cover **12** begins to deform, the extent of this deformation relative to the sidewalls **14a, 14b** is minimal since the reinforcing members **30a-30f** and **30a¹-30f¹** are of almost the same height as the sidewalls **14a, 14b,** and thus, contact the inner surface of the cover **12** after a small amount of deformation. As a result, no space forms between the first and second covers **12, 14,** and thus, the container **10** is cannot be pried open.

The present specification describes the use of groups of five ribs **30b-30f** and **30b¹-30f¹** as reinforcing members. However, it should be understood that fewer ribs or more ribs may be used, as desired.

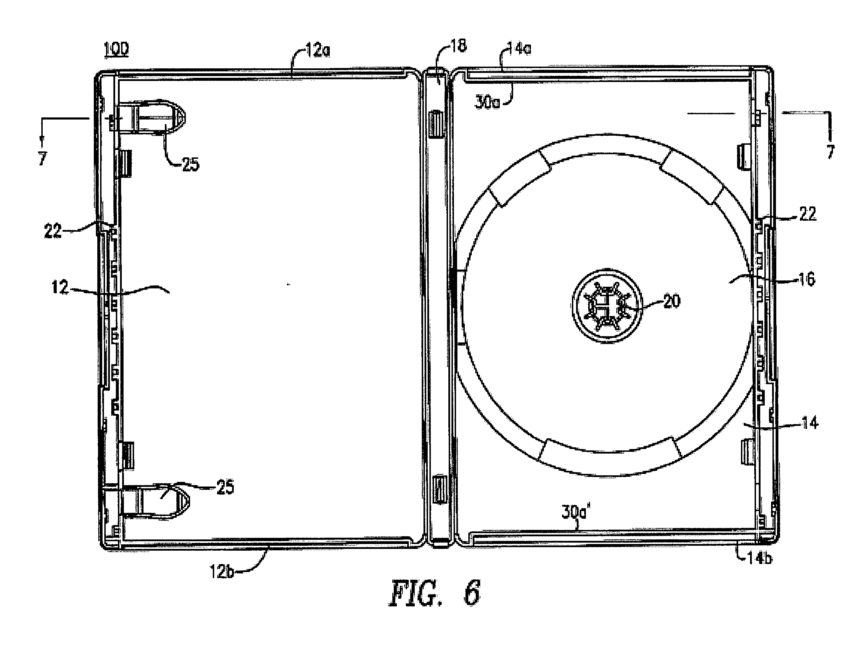

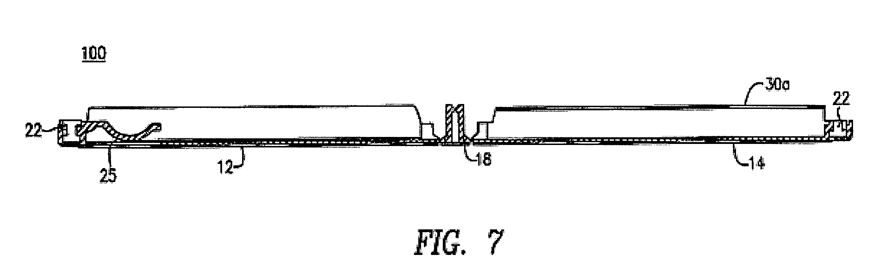

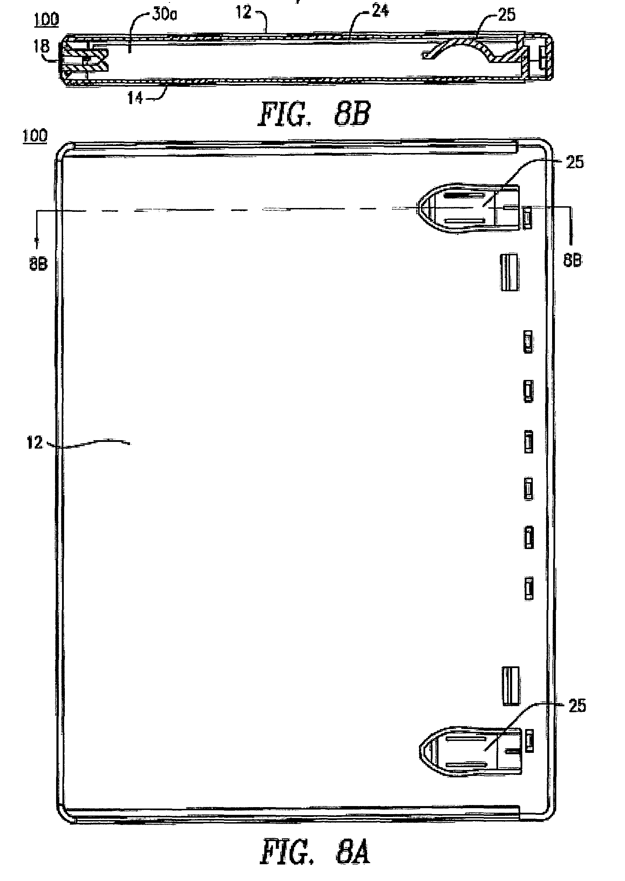

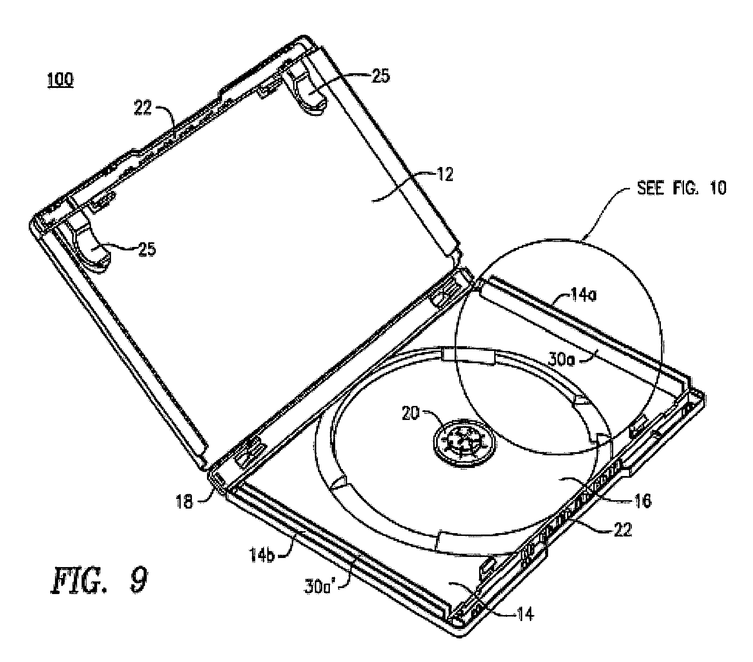

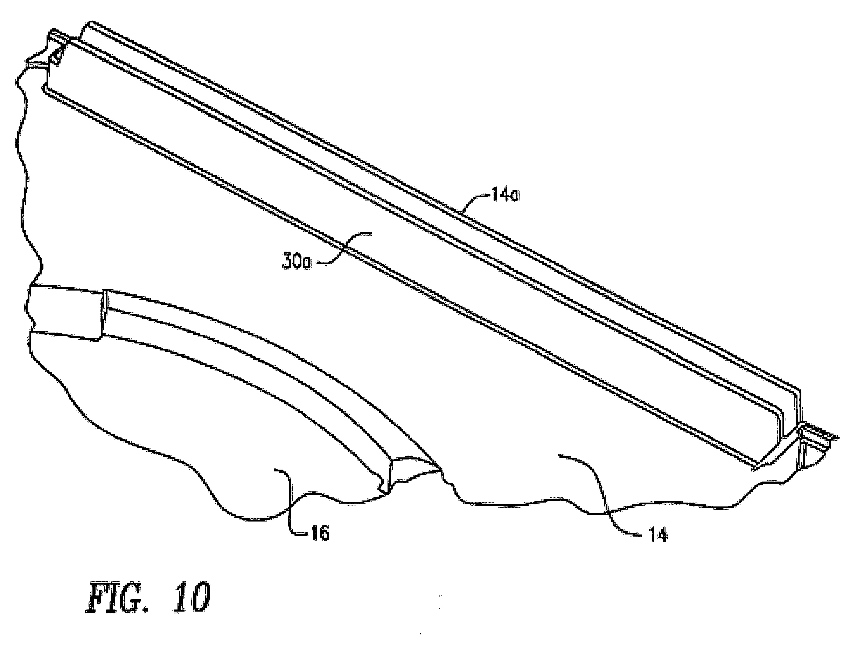

In an alternative embodiment, illustrated in Figs. 6-10, the ribs **30b-30f** and **30b¹-30¹** are eliminated. Thus, in the lockable container **100** illustrated in Figs. 6-10, only the inner walls **30a** and **30a¹** are used as reinforcing members. However, since the walls **30a, 30a¹** are of almost the same height as the sidewalls **14a, 14b,** the cover **12** will only deform a small extent before being stopped by the inner walls **30a, 30a¹.** In addition, the inner walls 30a, **30a¹** help prevent deformation of the top and bottom sidewalls **14a, 14b** of the second cover **14** as well. Otherwise, the container **100** of Figs. 6-10 operates in substantially the same manner as the container **10** described above and common reference numerals refer to common components. In order to avoid repetition, Figures 6-10 are not described in further detail herein.

While the present application describes the reinforcement members **30a-30f** and **30a¹-30f¹** being positioned on the inner surface of the second cover, or base **14,** it is noted that they may be mounted on the inner surface of the first cover **12,** if desired. However, in this case, the clips **25** are preferably removed from the first cover **12.**

Although the present invention has been described in relation to particular embodiments thereof, many other variations and modifications and other uses will become apparent to those skilled in the art. It is preferred, therefore, that the present invention be limited not by the specific disclosure herein, but only by the appended claims.

## Claims

1. A lockable container comprising:
a first cover having a first inner surface;
a second cover having a second inner surface positioned opposing the first cover;
a connecting portion connecting the first cover and the second cover such that the first cover is movable relative to the second cover between an open position, and a closed position at which the first and second inner surfaces are opposing; and
a reinforcing structure mounted on one of the first and second inner surfaces, wherein the reinforcing structure is structured, sized and positioned to limit deformation of the other of the first cover and the second cover which has the other of the first and second inner surfaces.

2. The lockable container of claim 1, further comprising a device at one of the covers operable to carry an asset in the container with the covers at the closed position.

3. The lockable container of claim 1, further comprising:
each of the inner surfaces having a respective first and opposite second end region;
a first cover sidewall extending upward from the first end region of the first inner surface of the first cover;
a second cover sidewall extending upward from the second end region of the first inner surface of the first cover;
a first base sidewall extending upward from the first end region of the second inner surface of the second cover; and
a second base sidewall extending upward from the second end region of the inner surface of the second cover,
the first cover sidewall is spaced inwardly relative to the first base sidewall such that the first base sidewall forms an outer wall of the container at a first end region of the first and second covers when they are in the closed position; and
the second cover sidewall is spaced inwardly relative to the second base sidewall such that the second base sidewall forms an outer wall of the container at a second end region of the first and second covers when they are in the closed position.

4. The lockable container of claim 3, wherein the reinforcing structure comprises a first inner wall extending upward from the second inner surface of the second cover to a first height and located at the first end region of the second inner surface;
the first inner wall is spaced inwardly on the second inner surface from the first base sidewall such that the first cover sidewall is between the first base sidewall and the first inner wall when the first and second covers are in the closed position, and
the first inner wall is shaped and structured to prevent substantial deformation of the first cover when pressure is applied to the first cover.

5. The lockable container of claim 4, wherein the first inner wall extends parallel to the first base sidewall.

6. The lockable container of claim 4, wherein the reinforcing structure further comprises a second inner wall extending upward from the second inner surface of the second cover to the first height and located at the second end region of the second inner surface,
the second inner wall is spaced inwardly on the second inner surface from the second base sidewall such that the second cover sidewall is between the second base sidewall and the second inner wall when the first and second covers are in the closed position, and
the second inner wall is shaped and structured to prevent substantial deformation of the first cover when pressure is applied to an outer surface of the first cover.

7. The lockable container of claim 6, wherein the reinforcing structure further comprises a first plurality of ribs extending upward from the first end region of the second inner surface of the second cover to the first height, the first plurality of ribs starting near to and extending away from the first inner wall, and
the first plurality of ribs are shaped and structured to prevent substantial deformation of the first cover when pressure is applied to the first cover.

8. The lockable container of claim 7, wherein the reinforcing structure further comprises a second plurality of ribs extending upward from the second end region of the second inner surface of the second cover to the first height, the second plurality of ribs starting near to and extending in a direction perpendicular to the second inner wall, and
the second plurality of ribs are shaped and structured to prevent substantial deformation of the first cover when pressure is applied to the first cover.

9. The lockable container of claim 8, further comprising a clip positioned in the first cover and operable to secure an object to the first inner surface of the first cover, and the first height of the reinforcing structure is set to define a space between a top side of the reinforcing structure and the first inner surface of the first cover to accommodate an object secured in the clip.

10. The lockable container of claim 1, further comprising a lock operable to lock the first and second covers together in the closed position.
